Europäisches Patentamt

(19) European Patent Office                    (11) Publication number:          **0 079 245**

Office européen des brevets                                                **B1**

(12)                    **EUROPEAN PATENT SPECIFICATION**

(45) Date of publication of patent specification: **04.02.87**          (51) Int. Cl.⁴: **B 29 C 61/00, H 02 G 15/18**

(21) Application number: **82305979.5**

(22) Date of filing: **10.11.82**

(54) **Recoverable closure.**

(30) Priority: **10.11.81 GB 8133850**

(43) Date of publication of application:
**18.05.83 Bulletin 83/20**

(45) Publication of the grant of the patent:
**04.02.87 Bulletin 87/06**

(84) Designated Contracting States:
**AT BE CH DE FR IT LI NL SE**

(56) References cited:
**FR-A-2 414 263**
**FR-A-2 422 087**
**GB-A-2 044 561**
**US-A-3 297 819**

(73) Proprietor: **N.V. RAYCHEM S.A.**
**Diestsesteenweg 692**
**B-3200 Kessel-lo (BE)**

(72) Inventor: **Franckx, Joris Rene Isabella**
**Halmenhoek 7**
**B-2820 Bonheiden (BE)**

(74) Representative: **Benson, John Everett et al**
**Raychem Limited Intellectual Property Law**
**Department Swan House 37-39, High Holborn**
**London WC1 (GB)**

Courier Press, Leamington Spa, England.

EP 0 079 245 B1

## Description

The present invention relates to the use of recoverable articles in the protection of supply lines and other substrates.

Recoverable articles, especially heat-recoverable articles, are useful where insulation, sealing and encapsulation of power and communication cables are required. They are particularly useful for highly effective protection of branch-offs between 2 or more cables.

A heat-recoverable article is an article the dimensional configuration of which may be made substantially to change when subjected to heat treatment. Usually these articles recover, on heating, towards an original shape from which they have previously been deformed but the term "heat-recoverable", as used herein, also includes an article which, on heating, adopts a new configuration, even if it has not been previously deformed.

In their most common form, such articles comprise a heat-shrinkable sleeve made from a polymeric material exhibiting the property of elastic or plastic memory as described, for example, in U.S.—A—2 027 962; U.S.—A—3 086 242 and U.S.—A—3 597 372. As is made clear in, for example, U.S.—A—2 027 962, the original dimensionally heat-stable form may be a transient form in a continuous process in which, for example, an extruded tube is expanded, whilst hot, to a dimensionally heat-unstable form but, in other applications, a preformed dimensionally heat stable article is deformed to a dimensionally heat unstable form in a separate stage. These patents, and other patents and applications mentioned in this specification are incorporated herein by reference.

In the production of heat-recoverable articles, the polymeric material may be cross-linked at any stage in the production of the article that will enhance the desired dimensional recoverability. One manner of producing a heat-recoverable article comprises shaping the polymeric material into the desired heat-stable form, subsequently cross-linking the polymeric material, heating the article to a temperature above the crystalline melting point or, for amorphous materials the softening point, as the case may be, of the polymer, deforming the article and cooling the article whilst in the deformed state so that the deformed state of the article is retained. In use, since the deformed state of the article is heat-unstable, application of heat will cause the article to assume its original heat-stable shape.

In other articles, as described, for example, in GB—A—1 440 524, an elastomeric member such as an outer tubular member is held in a stretched state by a second member, such as an inner tubular member, which, open heating weakens and thus allows the elastomeric member to recover.

Where a heat-recoverable article is used for sealing or encapsulation, the aid of a heat-activatable adhesive or sealant will generally be called for. Such an adhesive or sealant will be used to fill any voids and to provide a bond between the heat-recoverable article and the substrate to be protected that will resist the effects of the environment for an acceptable period of time.

A heat-activatable adhesive or a sealant is, therefore, an important feature in this type of cable encapsulation. Not only is such a material employed to fill the void between the diverging cables, but it will usually coat the entire inner surface of the sleeve to ensure a good seal between the sleeve and the cables. Many types of adhesives and sealants can be used depending on the conditions that the encapsulated product will face.

Heat-activatable adhesives (which are here preferred to sealants) include hot-melt adhesives whose melting and solidifying are repeatable, and the less used thermosets; the characterising feature of these materials is that they are crystalline and melt when heated thereby becoming activated.

By sealants we mean an adhesive material having a cohesive strength of the same order as its adhesive strength, which is used for filling voids and interstices to provide a seal against moisture, dust, solvents and other fluids. Sealant compositions are viscid, water-resistant macromolecular compositions resembling newtonian fluids in exhibiting both viscous and elastic response to stress. They exhibit, in the sense of ASTM 1146, at least second order cohesive blocking (and preferably second order adhesive blocking to metals as well) at a temperature between room temperature and the crystalline melt or glass transition temperature or range of the composition. Known sealant compositions usually comprise mixtures of elastomers, or mixtures of thermoplastic polymers, or both, and include mastics, and hot melt sealants as described in Bullman, Adhesives Age, November 1976, pages 25—28. A mastic is an adherent, cohesive sealing material intended to fill a gap between the components. As mastic can deform or yield plastically, that is, undergo viscous flow, both during application and in subsequent service at ambient temperatures. Mastics may consist of mixtures of substantially non-crystalline materials, for example, bituminous materials, elastomers, or thermoplastic polymers, and may contain inert fibrous or powdered fillers.

In the present case heat-recoverable sleeves will be the most important type of heat-recoverable article, and such sleeves may be tubular or if the substrates to be encapsulated have no conveniently free ends they may be of wrap-around configuration. Basically, this latter type are heat-recoverable sheets which can be wrapped round the substrate to form a tubular shape and which, in general, are provided with fastening means for holding them in the wrapped-around configuration during recovery. Typically such fastening means are mechanical in nature and comprise, for example, rigid clamps, pins or channel members which co-operate with suitably shaped moulded or extruded protuberances adjacent to the overlapping edges of the heat-recoverable sheet. Various types of fastening means are described, for example, in U.S.—A—3 379 218 and GB—A—1 155 470; GB—A—1 211 988 and GB—A—1 346 479. In other applications, however, the sheet may be held in the wrapped-around configuration during recovery by means of an adhesive which may, in some cases be applied on site.

Although heat-recoverable sleeves have been successfully employed in many fields, problems may arise when two or more supply lines or other substrates have to be sealed at one position. This problem, briefly introduced above, is known as branch-off and may occur at the outlet of, for example, a cable splice case, a feed-through or a dome-type jointing enclosure. One effective solution has been to use moulded heat-shrinkable parts provided with preformed outlets for the individual supply lines. However, such moulded parts have to be made specific to each application. Their versatility can be improved by the use of end caps which seal outlets which are not at that moment needed, as described and claimed in DE—A—27 48 383, but they are nonetheless expensive and not economic for many routine applications. One could of course use a specially shaped non-recoverable container to house the cable joints, the sealing being by means of a resin potting compound; such an arrangement is, however, complex, craft-sensitive, and can be unreliable, and the resins often have a short shelf life and form poor bonds.

A less expensive solution is to use mastic tape to seal the gap between the supply lines so that, on recovery, a proper encapsulation is formed at the end of the heat-recoverable part. However, the use of such tape requires skill in the part of the installer and the method is not applicable to large parts. In addition, the mastic may degrade the overall performance of products which are provided with an inner lining or coating of a hot-melt adhesive.

An alternative approach, adopted in FR—A—2 414 263 is to form individual outlets using a recoverable sleeve and a suitably shaped clip made of a relatively rigid material. The clip comprises two or more outer elongate legs and at least one inner elongate leg, at least part of the surface of the inner leg being provided with a heat-activatable adhesive or sealant thereon, the legs being so arranged that the clip can be positioned on the open ends of a heat-shrinkable sleeve, with the outer legs outside the sleeve and the inner leg inside the sleeve, so as to form at least two terminal conduits capable of receiving elongate substrates.

Where a branch-off is to be encapsulated, and sometimes in other situations, there will generally be a void (here between the diverging substrates) which must be filled with an impermeable material if proper sealing is to be achieved. This problem was realized in FR—A—2414263 and the ingenious solution proposed for enclosing a branch-off between at least two substrates is to employ a closure assembly comprising a recoverable sleeve and a clip which in use, is positioned between the substrates at an open end of the sleeve, and which holds the thicknesses of the sleeve towards each other thereby limiting during recovery a cross-sectional area of a crutch region between the substrates and the sleeve. The clip has a central leg within the sleeve, which partially fills the void itself and carries a heat-activatable adhesive or sealant which flows when the sleeve is heated for recovery, thereby nicely filling the void.

From FR—A—2 414 263 there is also known a method of forming an enclosure around a branch-off between at least two substrates which comprises:

a) surrounding the branch-off by a recoverable sleeve such that in use the sleeve has an open end portion and the substrates emerge from said open end portion,

b) positioning a clip at such end portion so as to limit during recovery a cross-section of a crutch region between the substrates and the sleeve,

c) causing recovery of the sleeve.

What has now been devised is an alternative way of causing heat-activatable adhesive or sealant to be properly located during recovery of a recoverable sleeve.

According to the present invention this object is achieved by a closure assembly which is characterised in that in use, the open end portion of the recoverable sleeve defines a reservoir therein which substantially disappears on recovery of the sleeve; and in that a heat-activatable adhesive or a sealant is present in the reservoir and is displaced into the crutch region between the substrates on substantial disappearance of the reservoir.

For the avoidance of doubt, it is pointed out that the term sleeve includes articles that are closed at one end.

The reservoir preferably completely disappears, but this is not of course necessary to cause displacement of sufficient adhesive or sealant. The way that recovery of the sleeve causes disappearance of the reservoir will depend on the way in which the sleeve is made and installed. It is not necessary that the part of the sleeve that constitutes the reservoir be recoverable since tension in the sleeve during recovery will spread around its circumference. It may, however, be found preferable to make the sleeve with uniform recovery over all its surface, or alternatively to induce greater recovery in the part constituting the reservoir; this will depend at which stage during production of the recoverable sleeve the material of the sleeve is shaped to produce the reservoir.

The amount of adhesive or sealant required (and hence the size of the reservoir) will depend of course on the size of the void to be filled. In order to limit that amount we employ a clip or similar member to hold the two thicknesses of the sleeve towards each other to reduce the size of the space between them. Co-operation between the sleeve and the clip can cause the reservoir to disappear in a controlled way thereby directing the adhesive or sealant in the desired direction.

The invention further provides a method of forming an enclosure around a branch-off between at least two substrates which comprises:

(a) surrounding the branch-off by a recoverable sleeve such that in use the sleeve has an open end portion and the substrates emerge from the open end portion, said open end portion defining a reservoir therein which substantially disappears on recovery of the sleeve said reservoir containing a heat-activatable adhesive;

(b) positioning a clip at said end portion so as to limit during recovery a cross-section of a crutch region between the substrates and the sleeve;

(c) causing recovery of the sleeve and activation of the adhesive such that substantial disappearance of the reservoir displaces activated adhesive into the crutch region to close said cross-section.

In order to form a properly sealed branch-off between the substrate this cross-sectional area should become filled with adhesive or sealant. Some of the adhesive or sealant which fills this area may come from a general coating on the sleeve at the same region, some will have travelled longitudinally along the sleeve during recovery, but a substantial portion will have been displaced radially or circumferentially by the disappearance of the reservoir.

The sleeve may conveniently be coated with a temperature indicating paint to give the workman an indication when sufficient heat has been applied to recover the sleeve or to melt or soften the adhesive or sealant. See, for example, GB—A—2038478.

Before a specific embodiment of the invention is described, the various components will be described in general terms.

The recoverable sleeve is preferably a tubular heat-recoverable sleeve. The material of the sleeve may be any suitable polymeric material which can be made recoverable by chemical or radiation treatment: see the above discussion on recoverability. Preferred materials, however, are polyolefins such as polyethylene or ethylene copolymers modified by such additives as fillers, stabilizers, pigments, plasticizers and flame-retardants, as the individual case requires. For example of suitable polymeric compositions see GB—A—1010064, GB—A—1284082 and GB—A—1294665.

The size and shape of the reservoir will next be considered. The main requirement is that it contains enough heat-activatable adhesive or sealant to provide a good seal between the cables or other substrates entering the sleeve. The amount of adhesive or sealant required will depend on the number, size and arrangement of substrates to be covered and on the extent to which the adhesive or sealant runs lengthwise along the substrates during recovery. We prefer that only one reservoir be provided at the or each end of the sleeve, although more than one may in some circumstances be desirable. The reservoir will generally be formed by deforming the material of the sleeve permanently (until recovery, that is), but alternatively the inner surface of a plain sleeve could contain a localised region of adhesive or sealant and the sleeve folded during installation, and kept folded by a clip, such that the adhesive lay within a fold which disappears during recovery. A further possibility is that the adhesive or sealant is supplied attached to the clip, and on installation is so positioned that it occupies a reservoir which disappears during recovery to direct the adhesive or sealant to the proper location.

The shape of the reservoir will preferably be either as a furrow, open at the end of the sleeve, or be a cylindrical depression on the inner surface appearing as a cylindrical projection on the outer surface. It is the size of the reservoir as it appears in transverse cross-section of the sleeve which mainly determines whether there will be sufficient adhesive or sealant to form a complete branch-off seal; the extension of the reservoir along the sleeve will however make the seal stronger and increase any leak path because of its increased length. As a rough guide, the perimeter of the reservoir in cross-section may be from 1/6 to 1/12 of the total perimeter of the sleeve. An enclosure for a pair of cables of diameter from 10—27 mm will generally require a reservoir of diameter from 4—15 mm, preferably about 8 mm. For two cables of 27 mm diameter the unrecovered sleeve should preferably be able to accommodate two diameters of 35 mm.

Hot-melt adhesives are preferred to other adhesives or to sealants, and of these, formulations which allow adhesion to untreated polyethylene can be expected to be of most use. Since the invention requires a flow of adhesive from the reservoir to the void between the cables, good flow characteristics will be of benefit. Preferred hot-melt adhesives include those based on EVA and those based on polyamides. Suitable adhesives are disclosed in US Patent Specifications 4181775 and 4018733.

The present invention is now further illustrated, by way of example, with reference to the accompanying drawings, in which:

Figure 1 shows in perspective an end of the sleeve, having a furrow-shaped reservoir;

Figure 2 is similar to Figure 1 but shows a cylindrical reservoir;

Figures 3a and 3b show different views of a suitable clip;

Figures 4 and 5 are before and after views, in cross-section, of the displacement of adhesive from the reservoir;

Figure 6 shows in cross-section, an alternative design employing two reservoirs and a four fingered clip; and

Figures 7 and 8 show two typical applications of the present invention.

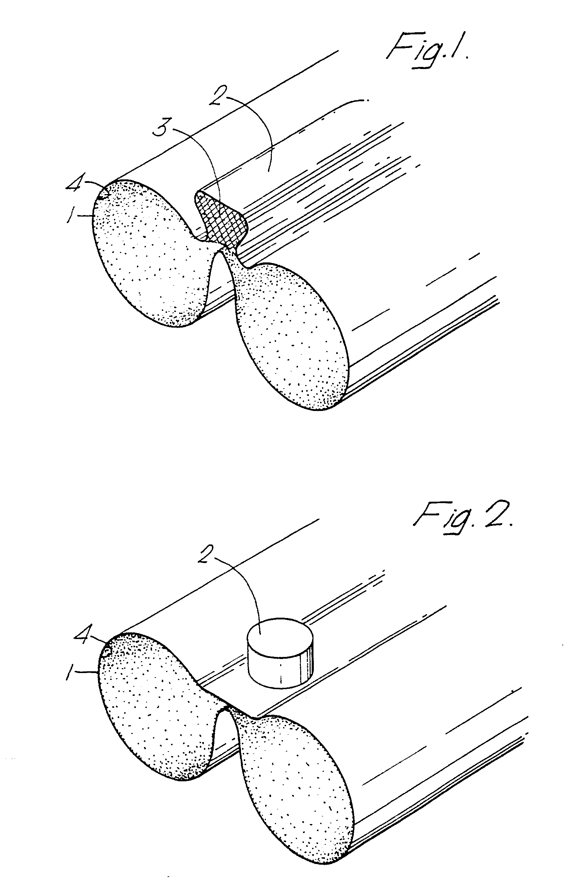

Figure 1 shows a recoverable tubular sleeve 1 having at an end thereof a reservoir 2 containing a hot-melt adhesive 3. The whole of the inner surface of the sleeve 1 is coated with an adhesive 4 for bonding to the ingoing substrates to be protected. In Figure 1 the reservoir is furrow shaped and in Figure 2 it is cylindrical. More than one such cylindrical reservoir could be provided, longitudinally spaced along the end portion of the sleeve.

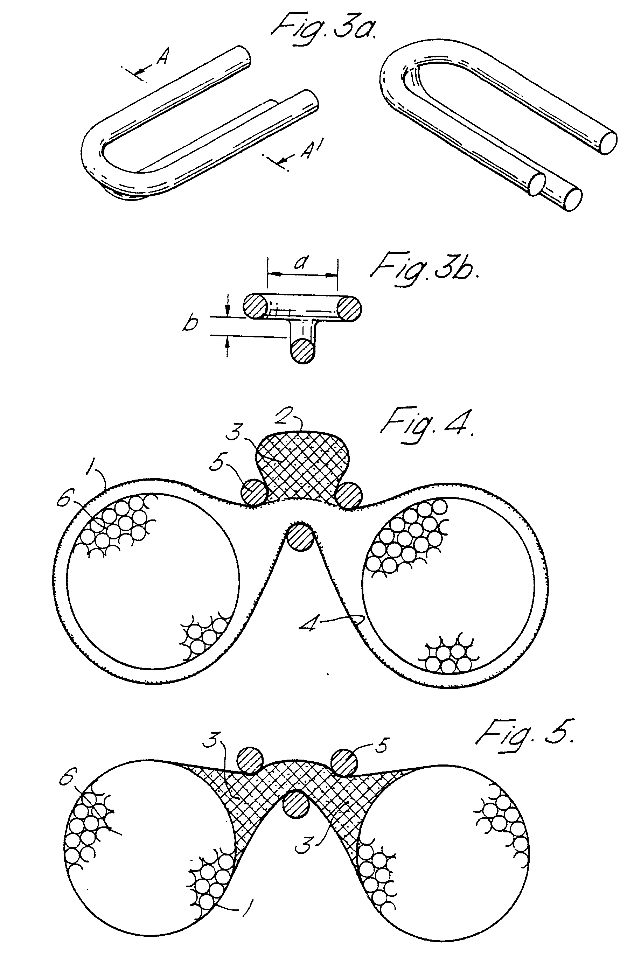

Figures 3a and 3b show a three fingered clip suitable for the embodiment of recoverable sleeve pictured in Figures 1 and 2.

The size of the clip can vary widely, but for a typical sleeve size the dimension "a" will be 8—12 mm, usually about 10.5 mm and the dimension "b" 0—0.5 mm usually about .2 mm. The clip may be made from solid material (generally metal, optionally coated with a plastics material), but may be stamped from sheet metal and then bent to shape.

Figures 4 and 5 show in cross-section a sleeve 1 around two cables 6. A clip 5 is positioned above the sleeve, between the two cables. A reservoir 2 filled with adhesive can be seen in Figure 4. After recovery, as shown in Figure 5, the sleeve 1 has shrunk tightly around the cables, and the reservoir has substantially disappeared causing displacement of adhesive 3.

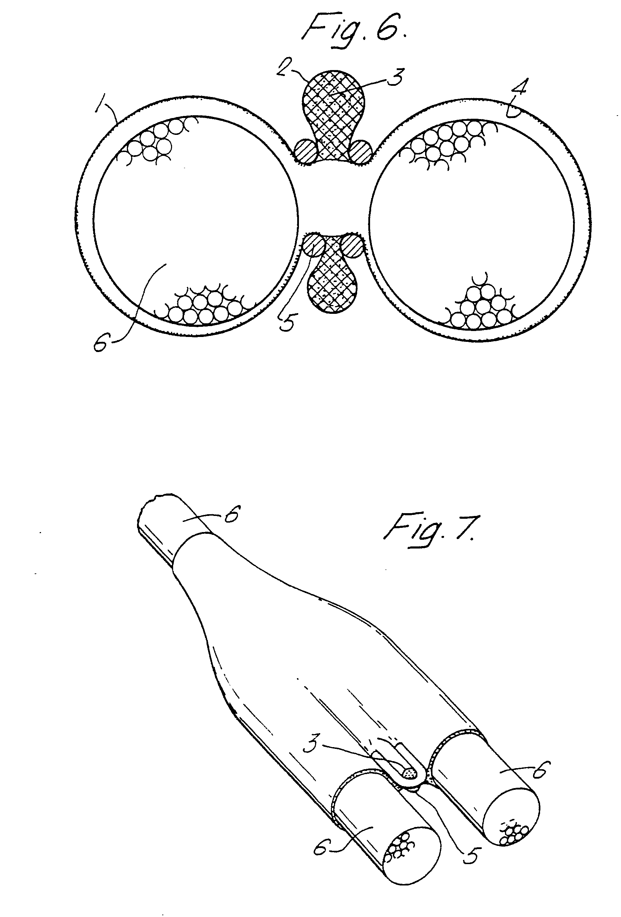

An alternative arrangement is shown in Figure 6 where a four fingered clip 5 is used to limit the cross-sectional area between the sleeve and the two cables. The four fingers allow projection of two reservoirs 2 containing adhesive 3. On recovery of the sleeve 1, the two reservoirs disappear in much the same way as in the previous embodiment.

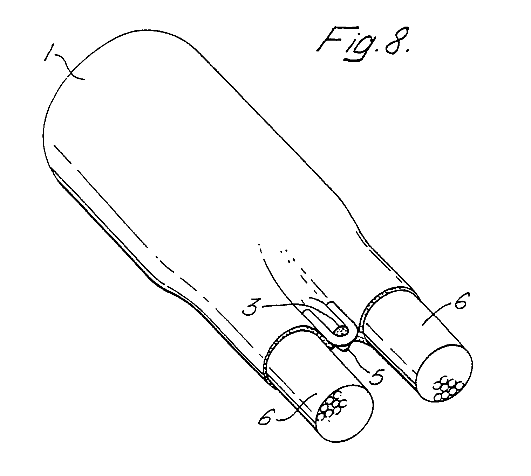

Figures 7 and 8 show two likely applications of the present invention. Figure 7 shows a splice case within which two ingoing cables and one outgoing cable are joined. The components visible in the drawing are a tubular outer sleeve 1, the cables 6 and a clip 5 which holds the two thicknesses of sleeve towards each other at the point where the two ingoing cables enter the sleeve. The void between these cables has been filled with an adhesive displaced from a reservoir, as explained above.

Figure 8 shows a sleeve 1 closed at one end. This type of closure is especially suited for radial distribution points in telecommunication systems. By means of the present invention a simple blind dome shaped sleeve can encase a cable joint and ensure proper sealing between the ingoing cables. The sleeve is placed over the joint, the clip 5 is positioned at the open end of the sleeve between the cables, and the sleeve is heat-recovered. Heating causes shrinkage of the sleeve about the cables and disappearance of the reservoir, which in turn displaces adhesive to the crutch region of the cables producing an excellent environmental seal. The whole of the sleeve may be recoverable, in which case a support liner may be provided around the cable joints, or alternatively the open end only of the sleeve may be recoverable. This method of sealing has many advantages over the traditional distribution closure, which is a complex arrangement comprising a cylindrical base, a domed cover, a hinged collar and an O-ring. Sealing involves use of a resin which is time consuming, and can produce a poor bonding to many materials. The success of the article also relies on the seal provided by the O-ring, a problem which does not arise in the article shown in Figure 8 since it will in general be formed from a single closed sleeve.

## Claims

1. A closure assembly suitable for enclosing a branch-off between at least two substrates, comprising a recoverable sleeve (1) and a clip (5) which, in use, is positioned between the substrates at an open end of the sleeve, and which holds the thicknesses of sleeve towards each other thereby limiting during recovery a cross-sectional area of a crutch region between the substrates and the sleeve; characterized in that in use, the open end portion of the recoverable sleeve defines a reservoir (2) therein which substantially disappears on recovery of the sleeve and in that a heat-activatable adhesive (3) or a sealant is present in the reservoir and is displaced into the crutch region between the substrates on substantial disappearance of the reservoir.

2. An assembly according to claim 1, wherein the reservoir (2) is permanent in the unrecovered sleeve (1).

3. An assmebly according to claim 1, wherein the reservoir (2) results from a deformation of the sleeve (1) which is maintained by the clip (5).

4. An assembly according to claim 1, wherein the heat-activatable adhesive or the sealant is supplied to the reservoir attached to the clip (5).

5. An assembly according to any preceding claim, wherein the substrates are electrically conductive cables.

6. An assembly according to any preceding claim, wherein the substrates are telecommunications cables.

7. An assembly according to any preceding claim, wherein the recoverable sleeve (1) constitutes at least part of a cable splice case.

8. An assembly according to any preceding claim, wherein the recoverable sleeve (1) constitutes at least part of a telecommunications radial distribution enclosure.

9. A method of forming an enclosure around a branch-off between at least two substrates which comprises:

a) surrounding the branch-off by a recoverable sleeve (1) such that in use the sleeve has an open end portion and the substrates emerge from the open end portion, said open end portion defining a reservoir (2) therein which substantially disappears on recovery of the sleeve said reservoir containing a heat-activatable adhesive;

b) positioning a clip (5) at said end portion so as to limit during recovery a cross-section of a crutch region between the substrates and the sleeve;

c) causing recovery of the sleeve and activation of the adhesive such that substantial disappearance of the reservoir displaces activated adhesive into the crutch region to close said cross-section.

10. A method according to claim 9, in which the recoverable sleeve (1) is heat-recoverable, and step (c) comprises heating the sleeve.

**Patentansprüche**

1. Verschlußanordnung, die zum Umschließen einer Abzweigung zwischen wenigstens zwei Substraten geeignet ist, die eine rückstellbare Hülse (1) und eine Klammer (5) aufweist, die im Gebrauchszustand zwischen den Substraten an einem offenen Ende der Hülse angeordnet ist und die die Dicken der Hülse in Richtung aufeinander hält, um bei der Rückstellung einen Querschnitt eines Gabelbereiches zwischen den Substraten und der Hülse zu begrenzen, dadurch gekennzeichnet, daß im Gebrauchszustand der offene Endteil der rückstellbaren Hülse darin einen Vorratsraum (2) begrenzt, der bei der Rückstellung der Hülse im wesentlichen vollständig verschwindet, und daß ein wärmeaktivierbarer Kleber (3) oder ein Dichtmittel in dem Vorratsraum vorhanden ist und in den Gabelbereich zwischen den Substraten bei dem im wesentlichen vollständigen Verschwinden des Vorratsraumes verdrängt wird.

2. Anordnung nach Anspruch 1, bei der der Vorratsraum (2) ständig in der nichtzurückgestellten Hülse (1) vorhanden ist.

3. Anordnung nach Anspruch 1, bei der der Vorratsraum (2) aus einer Deformation der Hülse (1) resultiert, die durch die Klammer (5) gehalten ist.

4. Anordnung nach Anspruch 1, bei der der wärmeaktivierbare Kleber oder das Dichtmittel dem an der Klammer (5) angebrachten Vorratsraum zugeführt wird.

5. Anordnung nach einem der vorangehenden Ansprüche, bei der die Substrate elektrisch leitende Kabel sind.

6. Anordnung nach einem der vorangehenden Ansprüche, bei der die Substrate Fernmeldekabel sind.

7. Anordnung nach einem der vorangehenden Ansprüche, bei der die rückstellbare Hülse (1) wenigstens einen Teil eines Kabelspleissungsgehäuses bildet.

8. Anordnung nach einem der vorangehenden Ansprüche, bei der die rückstellbare Hülse (1) wenigstens einen Teil eines radialen Verteilergehäuses von Fernmeldekabeln bildet.

9. Verfahren zum Bilden einer Umschließung um eine Abzweigung zwischen wenigstens zwei Substraten, bei dem vorgesehen sind:

a) Umgeben der Abzweigung durch eine rückstellbare Hülse (1) derart, daß im Gebrauchszustand die Hülse einen offenen Endteil hat und die Substrate von dem offenen Endteil her austreten, wobei der offene Endteil einen Vorratsraum (2) darin begrenzt, der bei der Rückstellung der Hülse im wesentlichen vollständig verschwindet, wobei der Vorratsraum einen wärmeaktivierbaren Kleber enthält,

b) Anordnen einer Klammer (5) an diesem Endteil, so daß während der Rückstellung ein Querschnitt eines Gabelbereiches zwischen den Substraten und der Hülse begrenzt wird, und

c) Bewirken der Rückstellung der Hülse und Aktivierung des Klebers, so daß das im wesentlichen vollständige Verschwinden des Vorratsraums den aktivierten Kleber in den Gabelbereich verdrängt, um den Querschnitt zu schließen.

10. Verfahren nach Anspruch 9, bei dem die rückstellbare Hülse (1) wärmerückstellbar ist und der Schritt (c) die Erwärmung der Hülse aufweist.

**Revendications**

1. Ensemble de fermeture convenant à l'enveloppement d'une dérivation entre au moins deux substrats, comprenant un manchon (1) doué de reprise de forme et une attache (5) qui, lors de l'utilisation, est positionnée entre les substrats à une extrémité ouverte du manchon, et qui maintient les épaisseurs du manchon l'une vers l'autre afin de limiter, pendant la reprise de forme, l'aire de la section transversale d'une zone d'enfourchure entre les substrats et le manchon; caractérisé en ce que, lors de l'utilisation, le tronçon extrême ouvert du manchon doué de reprise de forme, définit un réservoir (2) qui disparaît sensiblement lors d'une reprise de forme du manchon, et en ce qu'un adhésif (3) pouvant être activé par la chaleur ou une matière d'obturation étanche est présent dans le réservoir et est amené dans la zone d'enfourchure entre les substrats lorsque le réservoir disparaît sensiblement.

2. Ensemble selon la revendication 1, dans lequel le réservoir (2) est permanent dans le manchon (1) n'ayant pas effectué de reprise de forme.

3. Ensemble selon la revendication 1, dans lequel le réservoir (2) résulte d'une déformation du manchon (1) qui est maintenu par l'attache (5).

4. Ensemble selon la revendication 1, dans lequel l'adhésif pouvant être activé par la chaleur ou la matière d'obturation étanche est fourni au réservoir relié à l'attache (5).

5. Ensemble selon l'une quelconque des revendications précédentes, dans lequel les substrats sont des câbles électriquement conducteurs.

6. Ensemble selon l'une quelconque des revendications précédentes, dans lequel les substrats sont des câbles de télécommunication.

7. Ensemble selon l'une quelconque des revendications précédentes, dans lequel le manchon (1) doué de reprise de forme constitue au moins une partie d'une boîte de jonction de câbles.

8. Ensemble selon l'une quelconque des revendications précédentes, dans lequel le manchon (1) doué de reprise de forme constitue au moins une partie d'une enveloppe de distribution radiale de télécommunication.

9. Procédé pour former une enveloppe autour d'une dérivation entre au moins deux substrats, qui consiste:

a) à entourer la dérivation d'un manchon (1) doué de reprise de forme de manière que, lors de l'utilisation, le manchon présente un tronçon extrême ouvert et que les substrats sortent du tronçon extrême ouvert, ledit tronçon extrême ouvert définissant un réservoir (2) qui disparaît sensiblement lors d'une reprise de forme du manchon, ledit réservoir contenant un adhésif pouvant être activé par la chaleur;

b) à positionner une attache (5) audit tronçon extrême afin de limiter, pendant la reprise de forme, la section transversale d'une zone d'enfourchure entre les substrats et le manchon;

c) à provoquer une reprise de forme du manchon et l'activation de l'adhésif de manière qu'en disparaissant sensiblement, le réservoir amène l'adhésif activé dans la zone d'enfourchure pour fermer ladite section transversale.

10. Procédé selon la revendication 9, dans lequel le manchon (1) doué de reprise de forme est doué de reprise de forme par la chaleur, et en ce que l'étape (c) consiste à chauffer le manchon.

*Fig.1.*

*Fig.2.*

0 079 245

Fig. 3a.

Fig. 3b.

Fig. 4.

Fig. 5.

2

*Fig. 6.*

*Fig. 7.*

Fig. 8.